(19) Europäisches Patentamt
European Patent Office
Office européen des brevets

(11) EP 0 919 594 B1

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.[7]: **C08L 83/04**, C08K 9/12

(21) Anmeldenummer: **98118554.9**

(22) Anmeldetag: **01.10.1998**

(54) **Verfahren zur Herstellung additionsvernetzter Siliconkautschuke mit niedrigem Druckverformungsrest**

Process for the production of addition-cured silicone elastomers having low compression set

Procédé de préparation d'élastomères de silicone réticulés par addition ayant une déformation permanente réduite

(84) Benannte Vertragsstaaten:
**AT BE CH DE ES FI FR GB IT LI NL SE**

(30) Priorität: **20.11.1997 DE 19751523**

(43) Veröffentlichungstag der Anmeldung:
**02.06.1999 Patentblatt 1999/22**

(73) Patentinhaber: **Wacker-Chemie GmbH
81737 München (DE)**

(72) Erfinder:
- **Achenbach, Frank Dr.
84359 Simbach/Inn (DE)**
- **Wörner, Christof Dr.
84489 Burghausen (DE)**
- **Fehn, Armin Dr.
84547 Emmerting (DE)**
- **Rothenaicher, Otto
84367 Zeilarn (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
**EP-A- 0 731 131** **US-A- 4 526 953**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verbesserung mechanischer Eigenschaften von additionsvernetztem Siliconkautschuk.

In zahlreichen Anwendungen additionsvernetzter Siliconkautschuke ist es von besonderer Wichtigkeit, daß sich der Siliconkautschuk bei einer Druckbelastung nicht bleibend verformt. Beispielsweise würde die Funktionstüchtigkeit einer Dichtung vermindert oder gänzlich aufgehoben, wenn sich diese unter Druckbelastung plastisch verhielte, denn mit zunehmender plastischer Verformung würde zugleich die aufgrund der Kompression des Siliconkautschuks auftretende Spannung, welche die Dichtheit garantiert, abnehmen. Folglich sollte der plastische Anteil am Deformationsverhalten unter Druckbelastung eines für derartige Anwendungen eingesetzten Siliconkautschuks möglichst gering sein. Diese Materialeigenschaft läßt sich mit Hilfe des Druckverformungsrestes nach DIN 53 517 quantifizieren, wodurch unterschiedliche Materialien miteinander verglichen werden können. Die Bestimmung des Druckverformungsrestes erfolgt durch Bestimmung der Dicke eines zylinderförmigen Probekörpers vor und im Anschluß an eine permanente Stauchung von 25 %, welche während 22 h bei einer Temperatur von 175°C erfolgt. Findet vollständige Rückbildung statt, wobei die Dicke des Probekörpers vor und nach der Belastungsprozedur identisch ist, beträgt der Druckverformungsrest 0 %; bleibt hingegen die während des Tests auferlegte Stauchung von 25 % auch nach Entlastung bestehen, beträgt der Druckverformungsrest 100 %.

Additionsvernetzte Siliconkautschuke weisen typischerweise einen Druckverformungsrest von bis zu 70 % auf. Um diesen zu verringern, ist es üblich, Siliconkautschuke im Anschluß an die Vernetzungsreaktion einer Temperung zu unterwerfen. Die Temperung ist eine thermische Nachbehandlung des Siliconkautschuks, die beispielsweise eine 4 h währende Lagerung bei 200°C unter Frischluftzufuhr umfaßt. Damit können sehr niedrige Druckverformungsreste erzielt werden, wobei aber eine Schrumpfung des Siliconkautschuks in Kauf genommen werden muß.

Bekannte Verfahren zur Reduzierung des Druckverformungsrests zielen auf die teilweise Vergiftung des Pt-Katalysators, so daß die additionsvernetzenden Siliconkautschukmassen noch vernetzt werden können und diese vernetzten Siliconkautschuke verringerte ungetemperte Druckverformungsreste aufweisen. Beispielsweise wird in der EP-A-388 201 der Druckverformungsrest durch Versetzen der additionsvernetzenden Siliconmassen mit Benzotriazol reduziert. Die teilweise Vergiftung des Pt-Katalysators führt jedoch zur Reduzierung der Vernetzungsgeschwindigkeit der additionsvernetzenden Siliconkautschukmassen. Ferner sind die mechanischen Eigenschaften nach deutlich längerer Stauchung als 22 h und/oder bei höherer Temperatur, insbesondere der Druckverformungsrest unbefriedigend.

Der vorliegenden Erfindung liegt die Aufgabe zugrunde, Siliconkautschuk bereitzustellen, der gute mechanische Eigenschaften besitzt und insbesondere ohne Temperung einen niedrigen Druckverformungsrest aufweist.

Gegenstand der Erfindung ist ein Verfahren zur Verbesserung der mechanischen Eigenschaften von additionsvernetztem Siliconkautschuk, bei dem der Siliconkautschuk mit mindestens eine aliphatisch ungesättigte Mehrfachbindung aufweisender Verbindung (A) in Kontakt gebracht wird, wobei die Verbindung (A) von außen in den Siliconkautschuk diffundiert und/oder
aus einer Verbindung (B) im Siliconkautschuk freigesetzt wird.

Das Verfahren zeichnet sich dadurch aus, daß keine Zusätze verwendet werden müssen, die eine Reduzierung der Vernetzungs.geschwindigkeit bewirken. Des weiteren zeichnen sich die mit Verbindung (A) in Kontakt gebrachten Siliconkautschuke dadurch aus, daß sie sehr niedrige Druckverformungsreste auch nach längerer Stauchung als 22 h und bei höheren Temperaturen als 175°C aufweisen. Ebenso zeigen die genannten Siliconkautschuke bei Stauchung eine geringe Abnahme der zur Aufrechterhaltung der Stauchung notwendigen Rückstellkraft bei Temperaturen oberhalb 50°C.

Der additionsvernetzte Siliconkautschuk wird vorzugsweise hergestellt durch Vernetzung von Siliconkautschukmassen, welche die Bestandteile

(I) alkenylfunktionelles Polyorganosiloxan
(II) SiH-funktionelles Vernetzungsmittel und
(III) Hydrosilylierungskatalysator umfassen.

Bestandteil (I) der Siliconkautschukmasse ist ein mindestens zwei Alkenylgruppen pro Molekül enthaltendes Polyorganosiloxan mit vorzugsweise einer Viskosität bei 25°C von 0,1 bis 500 000 Pa·s, insbesondere von 1 bis 100 Pa·s.

Die Zusammensetzung des Alkenylgruppen enthaltenden Polyorganosiloxans (I) entspricht vorzugsweise der durchschnittlichen allgemeinen Formel (1)

$$R_aR^1{}_bSiO_{(4-a-b)/2} \qquad (1),$$

in der

- **R** gleiche oder verschiedene einwertige, gegebenenfalls halogen- oder cyanosubstituierte, gegebenenfalls über eine organische zweiwertige Gruppe an Silicium gebundene $C_1$-$C_{10}$-Kohlenwasserstoffreste, die aliphatische Kohlenstoff-Kohlenstoff Mehrfachbindungen enthalten,
- **$R^1$** gleiche oder verschiedene einwertige, gegebenenfalls halogen- oder cyanosubstituierte, über SiC-gebundene $C_1$-$C_{10}$-Kohlenwasserstoffreste, die frei sind von aliphatischen Kohlenstoff-Kohlenstoff Mehrfachbindungen
- **a** eine solche nichtnegative Zahl, daß mindestens zwei Reste $R^1$ in jedem Molekül vorhanden sind, und
- **b** eine nicht negative Zahl, so daß (a+b) im Bereich von 1.8 bis 2.5 liegt, bedeuten.

Die Alkenylgruppen R sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus Oxyalkyleneinheiten, wie solche der allgemeinen Formel (2)

$$-(O)_c[(CH_2)_dO]_e- \qquad (2),$$

in der

- **c** die Werte 0 oder 1, insbesondere 0,
- **d** Werte von 1 bis 4, insbesondere 1 oder 2 und
- **e** Werte von 1 bis 20, insbesondere von 1 bis 5 bedeuten.

Die Oxyalkyleneinheiten der allgemeinen Formel (2) sind links an ein Siliciumatom gebunden.

Die Reste **R** können in jeder Position der Polymerkette, insbesondere an den endständigen Siliciumatomen, gebunden sein.

Beispiele für **$R^1$** sind Alkylgruppen, wie Methyl, Ethyl, Propyl, Butyl und Hexyl, Aryl- und Alkarylgruppen, wie Phenyl, Tolyl, Xylyl, Mesityl, Benzyl, β-Phenylethyl und Naphthyl, oder substituierte Gruppen, wie 3,3,3-Trifluorpropyl, o-, p- und m-Chlorphenyl, Bromtolyl und β-Cyanethyl. Bevorzugte Substituenten sind Fluor, Chlor und Brom. **$R^1$** weist vorzugsweise 1 bis 6 Kohlenstoffatome auf. Insbesondere bevorzugt sind Methyl und Phenyl.

Bestandteil (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie $RR^1_2SiO_{1/2}$ und $R^1_3SiO_{1/2}$, und difunktionellen Einheiten, wie $R^1_2SiO_{2/2}$ und $RR^1SiO_{2/2}$, auch trifunktionelle Einheiten, wie $RSiO_{3/2}$ und $R^1SiO_{3/2}$, und/oder tetrafunktionelle Einheiten der Formel $SiO_{4/2}$. Der Gehalt an diesen zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%. Das Alkenylgruppen enthaltende Polyorganosiloxan (I) kann auch Einheiten der allgemeinen Formel (3)

$$-OSi(R^2R^3)R^5Si(R^2R^3)- \qquad (3),$$

enthalten,
wobei

- **$R^2$** und **$R^3$** die vorstehend für **R** und **$R^1$** angegebenen Bedeutungen haben und
- **$R^5$** einen zweiwertigen organischen Rest, wie Ethylen, Propylen, Phenylen, Diphenylen oder einen Rest der allgemeinen Formel (2) bedeuten.

Einheiten der allgemeinen Formel (3) können bis zu einem Anteil von 50 Mol-% in (I) enthalten sein. Besonders bevorzugt ist die Verwendung Vinylgruppen enthaltender Polydimethylsiloxane, deren Moleküle der allgemeinen Formel (4)

$$(ViMe_2SiO_{1/2})_2(ViMeSiO)_f(Me_2SiO)_g \qquad (4),$$

entsprechen, wobei die nichtnegativen ganzen Zahlen **f** und **g** folgende Relationen erfüllen: f+1>0, 50<(f+g)<20000, vorzugsweise 200< (f+g) <1000, und 0< (f+1) / (f+g) <0.2.

Bestandteil (II) der Siliconkautschukmasse ist ein SiH-funktionelles Vernetzungsmittel, dessen Zusammensetzung der nachfolgenden durchschnittlichen Formel (5) entspricht

$$H_hR^6{}_iSiO_{(4-h-i)/2} \qquad (5),$$

in der

**$R^6$** die Bedeutungen von **$R^1$** haben und

**h** und **i** nichtnegative ganze Zahlen mit der Maßgabe sind, daß 0.5< (**h+i**) <3,0 und 0<**h**<2, so daß mindestens zwei siliciumgebundene Wasserstoffatome pro Molekül vorhanden sind.

Bevorzugt ist die Verwendung eines drei oder mehr SiH-Bindungen pro Molekül enthaltenden Vernetzungsmittels (II). Bei Verwendung eines nur zwei SiH-Bindungen pro Molekül aufweisenden Agens, empfiehlt sich die Verwendung eines Alkenylgruppen enthaltenden Polyorganosiloxans (I), das über mindestens drei Alkenylgruppen pro Molekül verfügt.

Der Wasserstoffgehalt des Vernetzungsmittels (II), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Der SiH-funktionelle Vernetzer (II) enthält vorzugsweise mindestens drei und höchstens 600 Siliciumatome pro Molekül. Bevorzugt ist die Verwendung von SiH-Vernetzern (II), die 4 bis 200 Siliciumatome pro Molekül enthalten.

Die Struktur des SiH-Vernetzers (II) kann linear, verzweigt, cyclisch oder netzwerkartig sein. Lineare und cyclische SiH-Vernetzer (II) sind Organosiloxane, deren Moleküle aus Einheiten der Formel $HR^6{}_2SiO_{1/2}$, $R^6{}_3SiO_{1/2}$, $HR^6SiO_{2/2}$ und $R^6{}_2SiO_{2/2}$ zusammengesetzt sind, wobei **$R^6$** die vorstehend angegebene Bedeutung hat. Verzweigte und netzwerkartige SiH-Vernetzer (II) enthalten zusätzlich trifunktionelle Einheiten der Formel $HSiO_{3/2}$ und/oder $R^6SiO_{3/2}$ und/oder tetrafunktionelle Einheiten der Formel $SiO_{4/2}$. Mit zunehmendem Gehalt an tri- und/oder tetrafunktionellen Einheiten weisen diese Vernetzungsmittel (II) eine harzartige, netzwerkartige Struktur auf. Die im SiH-Vernetzungsmittel (II) enthaltenen organischen Reste **$R^6$** werden üblicherweise so gewählt, daß diese mit den im Bestandteil (I) befindlichen Resten verträglich sind, so daß die Bestandteile (I) und (II) mischbar sind.

Als SiH-Vernetzer (II) können auch Kombinationen und Mischungen der hier beschriebenen SiH-funktionellen Vernetzungsmittel (II) verwendet werden.

Besonders bevorzugte SiH-Vernetzer sind lineare Polyorganosiloxane der allgemeinen Formel (7)

$$(HR^7{}_2SiO_{1/2})_j(R^7{}_3SiO_{1/2})_k(HR^7SiO_{2/2})_1(R^7{}_2SiO_{2/2})_m \qquad (7),$$

wobei

**$R^7$** die Bedeutungen von **$R^1$** haben und

die nichtnegativen ganzen Zahlen j**, k, l** und **m** folgende Relationen erfüllen: (j+k) =2, (j+1) >2, 5< (1+m) <200 und 1<1/ (1+m) <0.1.

Der SiH-funktionelle Vernetzer ist vorzugsweise in einer solchen Menge in der vernetzbaren Siliconkautschukmasse enthalten, daß das Molverhältnis von SiH-Gruppen zu Alkenylgruppen bei 0,5 bis 5, insbesondere bei 1,0 bis 3,0 liegt.

Bestandteil (III) dient als Katalysator für die als Hydrosilylierung bezeichnete Additionsreaktion zwischen den Alkenylgruppen des Bestandteils (I) und den siliciumgebundenen Wasserstoffatomen des Bestandteils (II). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysatoren (III) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. $(Ph_3P)_2PtCl_2$. Besonders bevorzugt sind Komplexe des Platins mit Vinylsiloxanen, wie sym-Divinyltetramethyldisiloxan.

Der Hydrosilylierungskatalysator (III) kann auch in mikroverkapselter Form eingesetzt werden, wobei der den Katalysator enthaltende und im Polyorganosiloxan unlösliche feinteilige Feststoff beispielsweise ein Thermoplast, wie Polyesterharz oder Siliconharz ist. Der Hydrosilylierungskatalysator (III) kann auch in Form einer Einschlußverbindung, beispielsweise in einem Cyclodextrin, eingesetzt werden.

Die Menge des eingesetzten Hydrosilylierungskatalysators (III) richtet sich nach der gewünschten Vernetzungsgeschwindigkeit sowie ökonomischen Gesichtpunkten. Bei Verwendung gebräuchlicher Platin-Katalysatoren liegt der Gehalt der vernetzbaren Siliconkautschukmasse bezogen auf Platin-Metall vorzugsweise im Bereich von 0.1 bis 500 Gew.-ppm, insbesondere bei 10 bis 100 Gew.-ppm Platin-Metall.

Um eine ausreichend hohe mechanische Festigkeit des Siliconkautschuks zu erzielen, ist es bevorzugt, aktiv verstärkende Füllstoffe als Bestandteil (IV) in die Siliconkautschukmasse einzuarbeiten. Als aktiv verstärkende Füllstoffe (IV) werden vor allem gefällte und pyrogene Kieselsäuren, sowie Gemische derselben verwendet. Die spezifische Oberfläche dieser aktiv verstärkenden Füllstoffe sollte mindestens 50 $m^2/g$ betragen oder vorzugsweise im Bereich von 100 bis 400 $m^2/g$ gemäß der Bestimmung nach der BET-Methode liegen. Derartige aktiv verstärkende Füllstoffe sind auf dem Gebiet der Siliconkautschuke sehr gut bekannte Materialien.

Die Verwendung hydrophober Füllstoffe (IV) ist besonders vorteilhaft, da diese auf einfache Weise direkt in den Bestandteil (I) eingemischt werden können, während sich beim Einmischen hydrophiler Füllstoffe die Zugabe eines Hydrobhobierungsmittels erforderlich macht. Verfahren zur Herstellung hydrophober Füllstoffe und deren Verwendung in Siliconkautschuken gehören zum Stand der Technik.

Der Gehalt der vernetzbaren Siliconkautschukmasse an aktiv verstärkendem Füllstoff (IV) liegt im Bereich von 0 bis 60 Gew.-%, vorzugsweise bei 10 bis 40 Gew.-%.

Die erfindungsgemäße Siliconkautschukmasse kann wahlweise als Bestandteil (V) weitere Zusätze zu einem Anteil von bis zu 70 Gew.-%, vorzugsweise von 0,01 bis 40 Gew.-%, enthalten. Diese Zusätze können z.B. Füllstoffe, Dispergierhilfsmittel, Haftvermittler, Inhibitoren, Pigmente, Farbstoffe, Weichmacher, Hitzestabilisatoren usw. sein.

Hierzu zählen Zusätze, wie Quarzmehl, Diatomeenerde, Tone, Kreide, Lithopone, Ruße, Graphit, Metalloxide, -carbonate, -sulfate, Metallstäube, Fasern, Farbstoffe, Pigmente usw. Insbesondere können harzartige Polyorganosiloxane, die im wesentlichen aus Einheiten der Formel $R^9{}_3SiO_{1/2}$, $R^9SiO_{3/2}$ und $SiO_{4/2}$, gegebenenfalls auch $R^9{}_2SiO_{2/2}$, bestehen, bis zu einem Anteil von 70 Gew.-%, vorzugsweise bis zu 40 Gew.-%, bezogen auf die gesamte Siliconkautschukmasse, enthalten sein. Das Molverhältnis zwischen monofunktionellen und tri- oder tetrafunktionellen Einheiten dieser Siliconharze liegt vorzugsweise im Bereich von 0,5 : 1 bis 1,5 : 1. $\mathbf{R^9}$ bedeutet einen beliebigen gegebenenfalls halogen- oder cyanosubstituierten Kohlenwasserstoffrest mit 1 bis 12 Kohlenstoffatomen. Bevorzugte Reste $\mathbf{R^9}$ sind der Methyl- und Phenylrest. Es können auch funktionelle Gruppen $\mathbf{R^9}$, insbesondere Alkenylgruppen $\mathbf{R^9}$ enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siliconöle mit $MethylvinylSiO_{1/2}$-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Nitrile, Diaziridine und Oxime.

Verbindung (A) weist vorzugsweise die allgemeinen Formeln (8) oder (9)

$$(R^{10})_2C{=}C(R^{10})_2 \qquad (8),$$

$$R^{10}C{\equiv}CR^{10} \qquad (9),$$

auf, in denen

**$R^{10}$** gleiche oder verschiedene Reste, nämlich Wasserstoff oder einwertige, aliphatische $C_1$-$C_{20}$-Kohlenwasserstoffreste, die gegebenenfalls als Substituenten Halogen, -CN, -$CO_2R^{11}$, -OH, -$OR^{11}$, -$COR^{11}$, -COH oder aromatische $C_5$-$C_{10}$-Kohlenwasserstoffreste tragen oder Organosiloxanreste aus 1 bis 50, insbesondere 1 bis 5 Siloxaneinheiten und

**$R^{11}$** $C_1$-$C_{10}$-Kohlenwasserstoffreste oder Organosiloxanreste aus 1 bis 50, insbesondere 1 bis 5 Siloxaneinheiten, bedeuten.

Die Reste **$R^{10}$** können weitere aliphatische Doppel- oder Dreifachbindungen aufweisen.

Bevorzugt sind endständige Alkene und Alkine, d.h. in den allgemeinen Formeln (8) und (9) bedeuten **$R^{10}$** auf einer Seite Wasserstoffatome. Bevorzugt sind Alkene, die bei 20°C und 0,10 MPa gasförmig sind.

Besonders bevorzugte Verbindungen (A) sind Ethen, Propen, n-Buten und Isobuten, insbesondere Ethen, da damit, eine sehr schnelle Verringerung des Druckverformungsrestes erzielt werden kann.

In einer ersten bevorzugten Ausführungsform diffundiert die Verbindung (A) von außen in den Siliconkautschuk. Als Verbindung (A) können alle mindestens eine aliphatisch ungesättigte Mehrfachbindungen aufweisenden Verbindungen, die in der Lage sind, in das Siliconelastomer hineinzudiffundieren, eingesetzt werden.

Der Siliconkautschuk kann bereits beim Vernetzen oder vorzugsweise danach mit Verbindung (A) in Kontakt gebracht werden.

Die Behandlung mit Verbindung (A) erfolgt vorzugsweise bei 20 bis 250°C, insbesondere bei höchstens 200°C. Im Unterschied zur üblichen Temperung bei 150-200°C ohne Anwesenheit von Verbindung (A) können niedrige Druckverformungsreste bei Lagerung in Gegenwart von Verbindung (A) schon bei Temperaturen von 20°C erhalten werden. Bei höheren Temperaturen kann die Temperzeit durch die Überlagerung mit Verbindung (A) drastisch verringert werden.

Bei der Behandlung des Siliconkautschuks ist Verbindung (A) vorzugsweise flüssig oder insbesondere gasförmig. Die Behandlung mit Verbindung (A) erfolgt vorzugsweise bei mindestens 0,05 MPa, insbesondere bei mindestens 0,1 MPa, da höherer Druck die Diffusionsgeschwindigkeit von Verbindung (A) im Siliconkautschuk beschleunigt.

Verbindung (A) kann bei der Behandlung des Siliconkautschuks rein oder als Gemisch mit einer Flüssigkeit oder einem Gas eingesetzt werden. Wenn Verbindung (A) gasförmig eingesetzt wird, kann diese mit Luft oder einem Inertgas, wie Stickstoff, Helium oder Argon vermischt werden.

Die Zeit der Behandlung des Siliconkautschuks mit Verbindung (A) hängt von Molekülgröße von Verbindung (A), Temperatur, Druck und Dicke des Siliconkautschukteils ab. Üblich ist 1 Minute bis 10 Stunden.

In Fig. 1 ist eine beispielhafte Vorrichtung für die Behandlung von Siliconkautschuk-Formteilen mit Verbindung (A) schematisch dargestellt. Die Formteile werden über den Trichter (1) durch eine Schleuse (2) in den Verbindung (A) enthaltenden Behälter (3) gegeben. Nach der Lagerung der Formteile im Behälter (3) werden die Formteile über die Schleuse (4) aus der Verbindung (A) enthaltenden Atmosphäre entfernt. Verbindung (A) wird über Einspeiseeinrichtung (6) zugeführt, kontinuierlich durch Pumpe (7) umgewälzt und kann bei Bedarf über eine Heizvorrichtung (8) erhitzt werden. Durch den Einsatz dieser Schleusentechnologie in Verbindung mit den Ventilen (9-12) kann durch Verwendung von Preßluft ein Arbeiten unter Berücksichtigung von Sicherheits- und Umweltaspekten gewährleistet werden.

In einer zweiten bevorzugten Ausführungsform wird die Verbindung (A) im Silikonkautschuk aus einer oder mehreren Verbindungen (B) freigesetzt. Verbindungen (B) werden der Silikonkautschukmasse vor dem Vernetzen zugesetzt.

Bei der zweiten Verfahrensvariante kann auf das Tempern oder Behandeln der hergestellten Formteile mit Verbindung (A) verzichtet werden. Die Schrumpfung des Silikonkautschuks bei der Temperung wird so umgangen. Eingesetzt werden solche Verbindungen (B), die während und nach der Vernetzung Verbindung (A) abspalten, da auf diese Weise sehr niedrige Druckverformungsreste erzielt werden können, ohne andere mechanischen Eigenschaften des vernetzten Siliconkautschuks zu beeinflussen.

Verbindung (A) wird aus Verbindungen (B) beispielsweise durch Wärme, Bestrahlung mit elektromagnetischen Wellen, wie UV-Licht, Mikrowellen oder Beschallen mit Ultraschall freigesetzt.

Vorzugsweise werden als Verbindungen (B) Verbindungen eingesetzt, die beim Erwärmen unter den Vernetzungsbedingungen, nämlich 30 bis 250°C, bevorzugt bei mindestens 50°C, insbesondere bei mindestens 100°C, bevorzugt bei höchstens 200°C, insbesondere bei höchstens 180°C, in der Lage sind, Verbindungen (A) freizusetzen. Dabei kann ein weiterer Verfahrensschritt eingespart werden.

Bevorzugte Verbindungen (B), welche beim Erwärmen Verbindungen (A) freizusetzen, sind:

(B1) 2-Alkoxy-4-Kohlenwasserstoff-1,3-dioxolane, vorzugsweise solche der allgemeinen Formel (10)

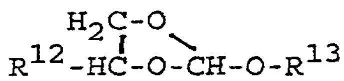

(10),

wobei
**$R^{12}$** und **$R^{13}$** beliebige unterschiedliche oder gleiche organische Reste sind.

Verbindungen (B1) setzen bei Temperaturerhöhung unter $CO_2$- und Alkoholabspaltung 1-Olefine, insbesondere solche der Formel $R^{12}$-HC=CH frei.

Vorzugsweise bedeuten **$R^{12}$** und **$R^{13}$** unterschiedliche oder gleiche,
gegebenenfalls halogen- oder cyanosubstituierte Kohlenwasserstoffreste mit 1 bis 18 Kohlenstoffatomen.

Besonders bevorzugte Reste **$R^{12}$** sind Alkylreste mit 1 bis 6 Kohlenstoffatomen, insbesondere der Ethylrest. Besonders bevorzugte Reste **$R^{13}$** sind Alkylreste mit 3 bis 12 Kohlenstoffatomen, insbesondere der n-Hexyl- und n-Decylrest.

Der Gehalt an 2-Alkoxy-4-Kohlenwasserstoff-1,3-dioxolan (B1) beträgt vorzugsweise 0,01 bis 20 Gew.-%, besonders bevorzugt 0,1 bis 10 Gew.-%, insbesondere 0,5 bis 3 Gew.-%, bezogen auf die Masse des Silikonkautschuks.

(B2) tertiär-Butylester, vorzugsweise solche der allgemeinen Formel (11)

$$R^{14}\text{-CO-O-C}(CH_3)_3 \quad (11),$$

wobei
**$R^{14}$** ein beliebiger einwertiger organischer Rest oder über einen zweiwertigen organischen Rest gebundener Rest ist, welcher aus Organosiloxan- und Kohlenwasserstoffeinheiten besteht.

Tertiär-Butylester (B2) setzen bei Temperaturerhöhung Isobuten frei.

Vorzugsweise bedeutet **$R^{14}$** Alkylreste mit 1 bis 20 Kohlenstoffatomen und über zweiwertige Alkylreste mit 1 bis 20 Kohlenstoffatomen gebundene Organosiloxanreste aus 1 bis 50 Einheiten der Formeln $R^9{}_3SiO_{1/2}$, $R^9{}_2SiO_{2/2}$, $R^9SiO_{3/2}$ und $SiO_{4/2}$, wobei **$R^9$** die vorstehenden Bedeutungen aufweist.

Der Gehalt an tertiär-Butylester (B2) beträgt vorzugsweise 0,01 bis 20 Gew.-%, besonders bevorzugt 0,1 bis 10 Gew.-%, insbesondere 0,5 bis 3 Gew.-%, bezogen auf die Masse des Silikonkautschuks.

(B3) Übergangsmetall-Komplexe mit Verbindung (A) als Liganden, die bei Raumtemperatur stabil sind und ab 30°C Verbindung (A) freisetzen.

In den Übergangsmetall-Komplexen (B3) sind bevorzugt als Verbindungen (A) Ethen, Propen und Isobuten, insbesondere Ethen. Als Übergangsmetalle bevorzugt sind Platin, Eisen, Palladium, Molybdän, Rhenium, Mangan, Ruthenium, Osmium, Iridium, Nickel und Rhodium, insbesondere Rhodium, Platin und Palladium.

Der Gehalt an Übergangsmetall-Komplex (B3) beträgt vorzugsweise 0,001 bis 10 Gew.-%, besonders bevorzugt 0,01 bis 8 Gew.-%, insbesondere 0,5 bis 3 Gew.-%, bezogen auf die Masse des Silikonkautschuks.

(B4) β-Halogenethyl-Organosiliciumverbindungen, vorzugsweise solche der allgemeinen Formel (12)

$$R^{15}{}_3\text{Si-}CH_2CH_2\text{-X} \quad (12),$$

wobei
**$R^{15}$** unterschiedliche oder gleiche Reste, die ausgewählt werden aus Alkylresten mit 1 bis 20 Kohlenstoffatomen, Alkoxyresten mit 1 bis 20 Kohlenstoffatomen und Organosiloxanresten aus 1 bis 50 Einheiten der Formeln $R^9{}_3SiO_{1/2}$, $R^9{}_2SiO_{2/2}$, $R^9SiO_{3/2}$ und $SiO_{4/2}$, wobei **$R^9$** die vorstehenden Bedeutungen aufweist und X Fluor, Chlor oder Brom bedeuten.

β-Halogenethyl-Organosiliciumverbindungen (B4) setzen bei Temperaturerhöhung Ethen frei.

Vorzugsweise bedeutet **$R^{15}$** Methoxy- und Ethoxyreste. Vorzugsweise bedeutet X Chlor.

Der Gehalt an β-Halogenethyl-Organosiliciumverbindungen (B4) beträgt vorzugsweise 0,01 bis 20 Gew.-%, besonders bevorzugt 0,1 bis 10 Gew.-%, insbesondere 0,5 bis 5 Gew.-%, bezogen auf die Masse des Silikonkautschuks.

(B5) Mikroporöse Feststoffe, die in der Lage sind, bei Raumtemperatur Verbindung (A) zu binden und diese bei erhöhten Temperaturen wieder freizusetzen.

Bevorzugte Beispiele für mikroporöse Feststoffe (B5) sind Zeolithe, Aktivkohle, poröser Graphit, poröse Gasfiltermaterialien, Kieselgel, Porosil, Ionenaustauscherharze, poröse organische Polymere bzw. -harze, wie vernetztes Polystyrolharz, welches als Säulenmaterial für die Gelpermeationschromatographie eingesetzt wird, Zukkerkohle und Clathrate.

Besonders bevorzugt sind Zeolithe, insbesondere die als Molekularsiebe bezeichneten Typen, vorzugsweise mit einem Porendurchmesser von 0,3 bis 20 nm.

Der Gehalt der mikroporösen Feststoffe (B5) an Verbindung (A) beträgt vorzugsweise mindestens 0,1, insbesondere mindestens 0,5 Gew.-% und vorzugsweise höchstens 60, insbesondere höchstens 10 Gew.-%.

Der Gehalt an mikroporösen Feststoffen (B5) einschließlich der gebundenen Verbindung (A) beträgt vorzugsweise 0,001 bis 40 Gew.-%, besonders bevorzugt 0,01 bis 5 Gew.-%, insbesondere 0,1 bis 2 Gew.-%, bezogen auf die Masse des Silikonkautschuks.

Die Einsatzmenge der verwendeten Verbindungen (B) richtet sich nach dem jeweilig verwendeten siliconkautschuk, so daß ohne Veränderung der mechanischen Eigenschaften, wie Härte, Reißfestigkeit und Reißdehnung niedrige Druckverformungsreste ohne Temperung erhalten werden kannen.

Gegenstand der Erfindung sind auch additionsvernetzbare Siliconkautschukmassen, welche die Bestandteile

(I) alkenylfunktionelles Polyorganosiloxan,
(II) SiH-funktionelles Vernetzungsmittel,
(III) Hydrosilylierungskatalysator und
(B) Verbindung, welche Verbindung (A) während und nach der Vernetzung freisetzt, umfassen. Es können auch beide bevorzugten Ausführungsformen kombiniert werden, indem Verbindung (B) dem Silikonkautschuk vor dem Vernetzen zugesetzt wird und Verbindung (A) von außen in den vernetzten Siliconkautschuk diffundieren gelassen wird.

Den unvernetzten Silikonkautschukmassen können zusätzlich Additive hinzugefügt werden, welche die bei der Zersetzung der Verbindung (B) gebildeten Nebenprodukte abfangen, um eventuelle nachteilige Einflüsse auf den vernetzten Siliconkautschuk zu verhindern. Beispielsweise können Säurefänger zugesetzt werden.

Sowohl Verbindungen (A) als auch Verbindungen (B) können mikroverkapselt der unvernetzten Silikonkautschukmasse hinzugefügt werden. Als Verkapselungsmaterialien können Siliconharze, die Alkyl- und/oder Phenylreste aufweisen, und/oder organische Thermoplaste verwendet werden. Auch eine Verkapselung von Verbindungen (A) und (B) in Hohlraumkugeln ist möglich.

Die Siliconkautschukmassen eignen sich besonders zur Herstellung formbeständiger Siliconkautschukformkörper, welche statisch- und/oder dynamisch-mechanisch beansprucht werden, wie Dichtungen, Dichtungsmaterialien, Dämpfungselemente, Schläuche und Folien, die ebenfalls Gegenstand der Erfindung sind.

In den nachfolgenden Beispielen sind, falls jeweils nicht anders angegeben,

a) alle Drücke 0,10 MPa (abs.);
b) alle Temperaturen 20° C .

Beispiele:

**Beispiel 1:**

200.0 g einer zu gleichen Teilen aus A- und B-Komponente bestehenden Flüssigsiliconkautschukmasse, die unter der Bezeichnung Elastosil® LR 3003/50 bei der Fa. Wacker Chemie GmbH, Deutschland, erhältlich ist, werden auf einer Walze bei einer Temperatur der Walzen von 25°C mit 1,0, 2,0 bzw. 4,0 g 2-.Ethoxy-4-hexyl-1,3-Dioxolan während 5 Minuten innig vermischt. Diese Mischung wird anschließend in einer hydraulischen Presse bei einer Temperatur von 170°C während 10 Minuten zu einer Siliconelastomerfolie vernetzt. Die entformten, ca. 2 mm bzw.6 mm dicken Siliconelastomerfolien werden nicht getempert, sondern im ungetemperten Zustand hinsichtlich des Druckverformungsrests sowie weiterer Elastomereigenschaften charakterisiert.

**Vergleichsbeispiel 2 (nicht erfindungsgemäß) :**

Wie in Beispiel 1 beschrieben, jedoch ohne 2-Ethoxy-4-hexyl-1,3-Dioxolan (Referenzbeispiel)

**Beispiel 3:**

Wie in Beispiel 1 beschrieben, jedoch wird anstelle von 2-Ethoxy-4-hexyl-1,3-Dioxolan jeweils die gleiche Menge an 2-Ethoxy-4-decyl-1,3-Dioxolan eingesetzt. Die übrige Zusammensetzung der Siliconkautschukmasse sowie die Weiterverarbeitung bleiben unverändert.

**Beispiel 4:**

Wie in Beispiel 1 beschrieben, jedoch wird anstelle von 2-Ethoxy-4-hexyl-1,3-Dioxolan jeweils die gleiche Menge an Undecansäure-tert-butylester eingesetzt. Die übrige Zusammensetzung der Siliconkautschukmasse sowie die Weiterverarbeitung bleiben unverändert.

**Beispiel 5:**

Wie in Beispiel 1 beschrieben, jedoch wird anstelle von 2-Ethoxy-4-hexyl-1,3-Dioxolan jeweils die gleiche Menge an Dichlorotetraethylendirhodium (I) eingesetzt. Die übrige Zusammensetzung der Siliconkautschukmasse sowie die Weiterverarbeitung bleiben unverändert.

**Beispiel 6:**

Molekularsieb-13X-Pulver (Aldrich) wird in einer dafür geeigneten Apparatur mehrere Stunden mit Ethen überlagert. 2,0, 4,0 bzw. 8,0 g des mit Ethen gesättigten Molekularsiebs werden in 200.0 g einer zu gleichen Teilen aus A- und B-Komponente bestehenden Flüssigsiliconkautschukmasse gemäß Beispiel 1 auf einer Walze bei einer Temperatur der Walzen von 25°C 5 Minuten innig vermischt. Diese Mischung wird anschließend in einer hydraulischen Presse bei einer Temperatur von 170°C während 10 Minuten zu einer Siliconelastomerfolie vernetzt. Die entformten, ca. 2 mm bzw. 6 mm dicken Siliconelastomerfolien werden nicht getempert, sondern im ungetemperten Zustand hinsichtlich des Druckverformungsrests sowie weiterer Elastomereigenschaften charakterisiert.

**Vergleichsbeispiel 7 (nicht erfindungsgemäß):**

Wie in Beispiel 1 beschrieben, jedoch werden anstelle von 2-Ethoxy-4-hexyl-1,3-Dioxolan 40 mg 1H-Benzotriazol eingesetzt. Die übrige Zusammensetzung der Siliconkautschukmasse sowie die Weiterverarbeitung bleiben unverändert.

**Beispiel 8:**

Aus der in Beispiel 2 hergestellten Folie werden zylindrische Probekörper mit einem Durchmesser von 13 mm und einer Probendicke von 6 mm ausgestanzt. In einer dafür geeigneten Apparatur werden diese Probekörper mit Ethen, Propen bzw. Isobuten 10 min bei einer Temperatur von 160°C überlagert. Anschließend werden Druckverformungsrest, Rückstellkraft bei 25% Stauchung und die Härte bestimmt.

**Charakterisierung der Siliconelastomereigenschaften:**

Die gemäß der Beispiele 1 bis 8 hergestellten, erfindungsgemäßen und nicht erfindungsgemäßen Siliconelastomere werden anhand folgender Kriterien bewertet:

a) Druckverformungsrest gemäß DIN 53 517 anhand zylinderförmiger Probekörper gleicher Abmessungen (Durchmesser: 13 mm, Höhe: 6 mm) unter gleicher Stauchung von 25% und unterschiedlicher Stauchungszeit von 22 h, 7 und 28 Tagen bei 175°C.
b) Härte Shore A gemäß DIN 53 505
c) Die Rückstellkraft wird an zylinderförmigen Probekörpern gleicher Abmessung (Durchmesser: 10 mm, Höhe: 6 mm) unter gleicher Stauchung von 25% und unterschiedlicher Stauchungszeit von 22 h, 7 und 28 Tagen bei 175°C bestimmt.

Tabelle 1 :

| Einfluß von 2-Ethoxy-4-hexyl-1,3-Dioxolan auf den Druckverformungsrest und Shore-A-Härte von Siliconelastomeren | | | |
|---|---|---|---|
| | Gehalt an Additiv [Gew.%] | Druckverformungsrest [%] | Härte [Shore A] |
| Beispiel 2 | ohne | 65 | 50 |
| Beispiel 1 | 0,5 | 40 | 50 |
| | 1,0 | 38 | 49 |
| | 2,0 | 35 | 49 |

Tabelle 2 :

| Einfluß von 2-Ethoxy-4-decyl-1,3-Dioxolan auf den Druckverformungsrest und Shore-A-Härte von Siliconelastomeren | | | |
|---|---|---|---|
| | Gehalt an Additiv [Gew.%] | Druckverformungsrest [%] | Härte [Shore A] |
| Beispiel 2 | ohne | 65 | 50 |
| Beispiel 3 | 0,5 | 42 | 49 |
| | 1,0 | 40 | 49 |
| | 2,0 | 32 | 48 |

Tabelle 3 :

| Einfluß von Undecansäure-tert-butylester auf den Druckverformungsrest und Shore-A-Härte von Siliconelastomeren | | | |
|---|---|---|---|
| | Gehalt an Additiv [Gew.%] | Druckverformungsrest [%] | Härte [Shore A] |
| Beispiel 2 | ohne | 65 | 50 |
| Beispiel 4 | 0,5 | 48 | 50 |
| | 1,0 | 40 | 50 |
| | 2,0 | 43 | 48 |

Tabelle 4 :

| Einfluß von Dichlorotetraethylendirhodium (I) auf den Druckverformungsrest und Shore-A-Härte von Siliconelastomeren | | | |
|---|---|---|---|
| | Gehalt an Additiv [Gew.%] | Druckverformungsrest [%] | Härte [Shore A] |
| Beispiel 2 | ohne | 65 | 50 |
| Beispiel 5 | 0,5 | 35 | 51 |
| | 1,0 | 27 | 49 |
| | 2,0 | 19 | 48 |

Tabelle 5 :

| Einfluß von ethenhaltigem Molekularsieb bzw. Benzotriazol auf den Druckverformungsrest, Rückstellkraft bei 25% Stauchung und Shore-A-Härte von Siliconelastomeren | | | | | |
|---|---|---|---|---|---|
| | Gehalt an Additiv [Gew.%] | Stauchungsdauer (25% Stauchung bei 175°) | Druckverformungsrest [%] | Rückstellkraft des Probekörpers [N] | Härte [Shore A] |
| Beispiel 2 | Ohne | 0 h | | 94 | 50 |
| | | 22 h | 65 | 55 | |
| | | 7 Tage | 73 | 47 | |
| | | 28 Tage | 79 | 42 | |
| Beispiel 6 | 1,0% ethenhaltiges Molekularsieb | 0 h | | 96 | 50 |
| | | 22 h | 32 | 66 | |
| | | 7 Tage | 41 | 59 | |
| | | 28 Tage | 53 | 53 | |
| | 2,0% ethenhaltiges Molekularsieb | 0 h | | 94 | 50 |
| | | 22 h | 18 | 80 | |
| | | 7 Tage | 25 | 74 | |
| | | 28 Tage | 46 | 68 | |
| | 4,0% ethenhaltiges Mo-lekularsieb | 0 h | | 95 | 49 |
| | | 22 h | 10 | 87 | |
| | | 7 Tage | 20 | 78 | |
| | | 28 Tage | 36 | 71 | |
| Beispiel 7 | 0,02% 1H-Benzotriazol | 0 h | | 94 | 50 |
| | | 22 h | 12 | 86 | |
| | | 7 Tage | 40 | 62 | |
| | | 28 Tage | 65 | 55 | |

Tabelle 6 :

| Einfluß der Überlagerung additionsvernetzter Siliconelastomere mit Olefinen (160°C, 10 min.) bzw. $H_2S$ (RT, 4 h) auf den Druckverformungsrest, Rückstellkraft bei 25% Stauchung und Shore-A-Härte | | | | | |
|---|---|---|---|---|---|
| | Überlagerungsagens | Stauchungsdauer (25% Stauchung bei 175°) | Druckverformungsrest [%] | Rückstellkraft des Probekörpers [N] | Härte [Shore A] |
| Beispiel 2 | Ohne | 0 h | | 94 | 50 |
| | | 22 h | 65 | 55 | |
| | | 7 Tage | 73 | 47 | |
| | | 28 Tage | 79 | 42 | |

Tabelle 6 : (fortgesetzt)

| Einfluß der Überlagerung additionsvernetzter Siliconelastomere mit Olefinen (160°C, 10 min.) bzw. $H_2S$ (RT, 4 h) auf den Druckverformungsrest, Rückstellkraft bei 25% Stauchung und Shore-A-Härte | | | | | |
|---|---|---|---|---|---|
| | Überlagerungsagens | Stauchungsdauer (25% Stauchung bei 175°) | Druckverformungsrest [%] | Rückstellkraft des Probekörpers [N] | Härte [Shore A] |
| Beispiel 8 | Ethen | 0 h | | 94 | 50 |
| | | 22 h | 9 | 86 | |
| | | 7 Tage | 18 | 79 | |
| | | 28 Tage | 34 | 70 | |
| | Propen | 0 h | | 95 | 50 |
| | | 22 h | 17 | 82 | |
| | Isobuten | 0 h | | 93 | 49 |
| | | 22 h | 27 | 75 | |

**Patentansprüche**

1. Verfahren zur Verbesserung der mechanischen Eigenschaften von additionsvernetztem Siliconkautschuk, bei dem der Siliconkautschuk mit mindestens eine aliphatisch ungesättigte Mehrfachbindung aufweisender Verbindung (A) in Kontakt gebracht wird, wobei die Verbindung (A) von außen in den Siliconkautschuk diffundiert und/oder aus einer Verbindung (B) im Siliconkautschuk freigesetzt wird.

2. Verfahren nach Anspruch 1, bei dem Verbindung (B) ausgewählt wird aus den Verbindungen

   (B1) 2-Alkoxy-4-Kohlenwasserstoff-1,3-dioxolanen,
   (B2) tertiär-Butylestern,
   (B3) Übergangsmetall-Komplexen mit Verbindung (A) als Liganden,
   (B4) β-Halogenethyl-Organosiliciumverbindungen und
   (B5) mikroporösen Feststoffen, die in der Lage sind, bei Raumtemperatur Verbindung (A) zu binden und diese bei erhöhten Temperaturen wieder freizusetzen.

3. Additionsvernetzbare Siliconkautschukmassen, welche die Bestandteile

   (I) alkenylfunktionelles Polyorganosiloxan,
   (II) SiH-funktionelles Vernetzungsmittel,
   (III) Hydrosilylierungskatalysator und
   (B) Verbindung, welche Verbindung (A) gemäß Anspruch 1 während und nach der Vernetzung freisetzt, umfassen.

4. Formkörper, herstellbar durch Vernetzung der Siliconkautschukmassen gemäß Anspruch 3.

**Claims**

1. Process for improving the mechanical properties of addition-crosslinked silicone rubber, in which the silicone rubber is brought into contact with a compound (A) having at least one aliphatically unsaturated multiple bond, wherein the compound
(A) diffuses from the outside into the silicone rubber and/or is liberated from a compound (B) in the silicone rubber.

2. Process according to Claim 1, in which compound

(B) is selected from among the compounds
(B1) 2-alkoxy-4-hydrocarbon-1,3-dioxolanes,
(B2) tertiary-butyl esters,
(B3) transition metal complexes containing compound (A) as ligands,
(B4) β-haloethyl-organosilicon compounds and
(B5) microporous solids which are able to bind compound (A) at room temperature and liberate it again at elevated temperatures.

**3.** Addition-crosslinkable silicone rubber compositions comprising the constituents

(I) alkenyl-functional polyorganosiloxane,
(II) SiH-functional crosslinker,
(III) hydrosilylation catalyst and
(B) compound which liberates compound (A) according to Claim 1 during and after crosslinking.

**4.** Mouldings which are able to be produced by crosslinking the silicone rubber compositions according to Claim 3.

## Revendications

**1.** Procédé d'amélioration des propriétés mécaniques de caoutchouc siliconé réticulé par addition, dans lequel le caoutchouc siliconé est mis en contact avec un composé (A) ayant au moins une liaison multiple aliphatiquement insaturée, le composé (A) diffusant depuis l'extérieur jusque dans le caoutchouc siliconé et/ou étant libéré d'un composé (B) dans le caoutchouc siliconé.

**2.** Procédé selon la revendication 1, dans lequel le composé (B) est choisi parmi les composés

(B1) des 2-alcoxy-4-hydrocarbure-1,3-dioxolanes,
(B2) des esters tertio-butyliques,
(B3) des complexes de métaux de transition avec le composé (A) en tant que ligands,
(B4) des composés β-halogénoéthyl-organosiliciés et
(B5) des matières solides microporeuses qui sont capables de se lier au composé (A) à la température ambiante et de le libérer à nouveau à des températures accrues.

**3.** Compositions de caoutchoucs siliconés réticulables par addition, comprenant les constituants

(I) un polyorganosiloxane à fonction alcényle,
(II) un agent de réticulation à fonction SiH,
(III) un catalyseur d'hydrosilylation et
(B) un composé qui libère le composé (A) selon la revendication 1 durant et après la réticulation.

**4.** Pièces moulées pouvant être produites par réticulation des compositions de caoutchoucs siliconés selon la revendication 3.

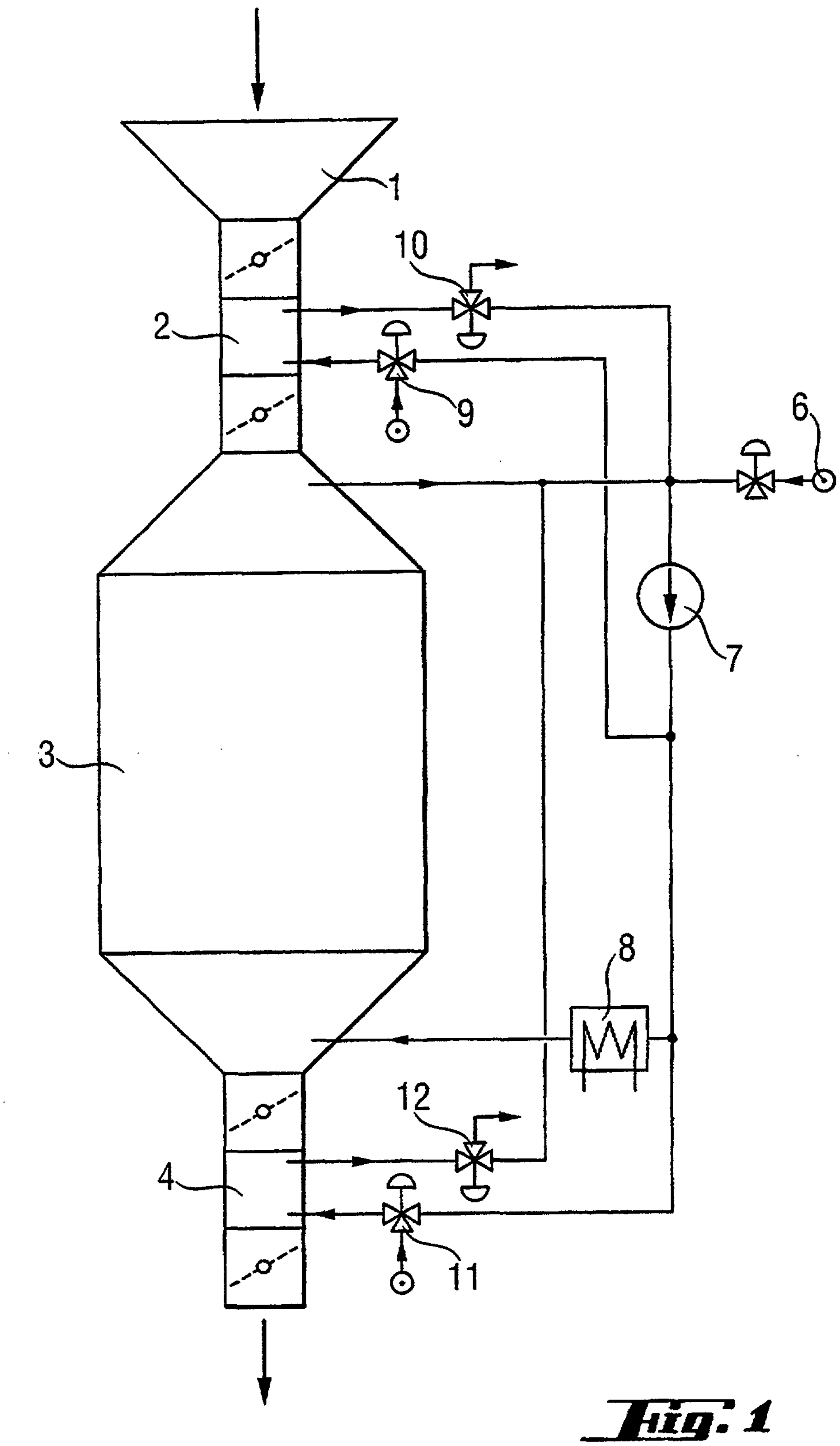


Fig. 1